(19) Europäisches Patentamt
European Patent Office
Office européen des brevets

(11) **EP 3 658 387 B1**

(12) **FASCICULE DE BREVET EUROPEEN**

(45) Date de publication et mention de la délivrance du brevet:
**15.12.2021 Bulletin 2021/50**

(21) Numéro de dépôt: **18752806.2**

(22) Date de dépôt: **02.07.2018**

(51) Int Cl.:
**B60C 9/00** *(2006.01)*     **B60C 9/20** *(2006.01)*
**B60C 11/00** *(2006.01)*

(86) Numéro de dépôt international:
**PCT/FR2018/051629**

(87) Numéro de publication internationale:
**WO 2019/020886 (31.01.2019 Gazette 2019/05)**

(54) **BANDAGE À STRUCTURE DE CEINTURE AMELIORÉE**

**REIFEN MIT VERBESSERTER GÜRTELSTRUKTUR**

**TYRE WITH IMPROVED BELT STRUCTURE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2017 FR 1757226**

(43) Date de publication de la demande:
**03.06.2020 Bulletin 2020/23**

(73) Titulaire: **Compagnie Générale des Etablissements Michelin**
**63000 Clermont-Ferrand (FR)**

(72) Inventeurs:
• **BONNET, Aymeric**
**63040 CLERMONT-FERRAND Cedex 9 (FR)**
• **CANEVET, Guilaine**
**63040 CLERMONT-FERRAND Cedex 9 (FR)**
• **DEROBERT-MAZURE, Jean-Charles**
**63040 CLERMONT-FERRAND Cedex 9 (FR)**
• **GUICHON, Cyril**
**63040 CLERMONT-FERRAND Cedex 9 (FR)**
• **SOULE-DE-BAS, Benjamin**
**63040 CLERMONT-FERRAND Cedex 9 (FR)**

(74) Mandataire: **Louret, Sylvain**
**M.F.P. MICHELIN**
**Service juridique - Propriété Intellectuelle**
**CBS/CORP/J/PI - F35 - Site de Ladoux**
**23, place des Carmes - Déchaux**
**63040 Clermont-Ferrand Cedex 9 (FR)**

(56) Documents cités:
**EP-A1- 2 738 015     WO-A1-2012/175305**
**WO-A1-2015/014575**

**Description**

L'invention concerne un bandage comprenant une armature de sommet améliorée. Par bandage, on entend une structure de forme sensiblement toroïdale. De préférence, l'invention concerne un bandage pneumatique. Par bandage pneumatique, on entend un bandage destiné à former une cavité en coopérant avec un élément support, par exemple une jante, cette cavité étant apte à être pressurisée à une pression supérieure à la pression atmosphérique. Par opposition, un bandage non pneumatique n'est pas apte à être pressurisé.

L'invention concerne le domaine des bandages destinés à équiper des véhicules. Le bandage est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

On connait un premier état de la technique décrit dans WO2013117476. WO2013117476 décrit un bandage pneumatique radial comprenant une armature de sommet comprenant une armature de travail comprenant des première et deuxième nappes de travail. Chaque nappe de travail comprend respectivement des premiers et deuxièmes éléments de renforts agencés les uns sensiblement parallèlement aux autres dans chaque première et deuxième nappe de travail et noyés respectivement dans des première et deuxième matrices élastomériques. Chaque premier et deuxième élément de renfort est constitué d'un monofilament métallique de diamètre égal à 0,30 mm. Dans chaque première et deuxième nappe de travail, la densité des éléments de renfort mesurée dans une direction perpendiculaire à l'axe principal des monofilaments métalliques est égale à 160 monofilaments par décimètre. Les épaisseurs moyennes mesurées dans la direction radiale de chaque première et deuxième nappe de travail sont égales à 0,75 mm. Du fait de l'épaisseur importante de chaque première et deuxième nappe de travail, le bandage décrit dans WO2013117476 présente une résistance au flambage relativement élevée. Du fait de cette épaisseur relativement importante, la masse, l'hystérèse de l'armature de sommet et donc la résistance au roulement du bandage sont perfectibles.

On connait un deuxième état de la technique décrit dans WO2012175305. WO2012175305 décrit un bandage pneumatique présentant une armature de sommet analogue à celle de WO2013117476 et dans lequel le diamètre des monofilaments métalliques est également égal à 0,30 mm. Contrairement au premier état de la technique décrit dans WO2013117476, la densité des éléments de renfort mesurée dans une direction perpendiculaire à l'axe principal des monofilaments métalliques de WO2012175305 est bien inférieure et égale à 110 monofilaments par décimètre et les épaisseurs moyennes mesurées dans la direction radiale de chaque première et deuxième nappe de travail sont égales à 0,48 mm. Un tel bandage pneumatique a été commercialisé par la société BARUM en 2015. Néanmoins, un tel bandage pneumatique, du fait de sa faible épaisseur, présente une résistance au flambage médiocre. En outre, du fait de la faible densité des éléments de renfort, la résistance mécanique de l'armature de sommet est relativement faible.

Un troisième état de la technique est décrit dans WO 2015014575 A.

L'invention a pour but de proposer un bandage présentant une masse moindre que le premier état de la technique et une résistance au flambage supérieure à celle du deuxième état de la technique.

L'invention a pour objet un bandage définissant trois directions principales, circonférentielle, axiale et radiale, comportant un sommet comprenant une bande de roulement, deux flancs, deux bourrelets, chaque flanc reliant chaque bourrelet au sommet, une armature de carcasse ancrée dans chacun des bourrelets et s'étendant dans les flancs et dans le sommet, une armature de sommet s'étendant dans le sommet selon la direction circonférentielle et situé radialement entre l'armature de carcasse et la bande de roulement, l'armature de sommet comprenant une armature de travail comprenant au moins des première et deuxième nappes de travail, chaque première et deuxième nappe de travail comprenant respectivement des premiers et deuxièmes éléments de renfort agencés les uns sensiblement parallèlement aux autres dans chaque première et deuxième nappe de travail, dans lequel au moins l'une des relations I ou II suivantes est satisfaite :

$$2050 \le (D1^4 \times d1 \times 1000) / E1 \le -3998 \times E1 + 4547 \qquad (I)$$

avec :

- D1 étant le diamètre de chaque premier élément de renfort constitué d'un monofilament métallique, exprimé en mm, D1 allant de 0,25 mm à 0,38 mm,
- d1 étant la densité des premiers éléments de renfort dans la première nappe de travail, exprimée en monofilaments par décimètre et mesurée dans une direction perpendiculaire à l'axe principal des monofilaments métalliques,
- E1 étant l'épaisseur moyenne de la première nappe de travail, exprimée en mm et mesurée dans la direction

radiale ;

$$2050 \leq (D2^4 \times d2 \times 1000) / E2 \leq -3998 \times E2 + 4547 \qquad (II)$$

avec

- D2 étant le diamètre de chaque deuxième élément de renfort constitué d'un monofilament métallique, exprimé en mm, D2 allant de 0,25 mm à 0,38 mm,
- d2 étant la densité des deuxièmes éléments de renfort dans la deuxième nappe de travail, exprimée en monofilaments par décimètre et mesurée dans une direction perpendiculaire à l'axe principal des monofilaments métalliques,
- E2 étant l'épaisseur moyenne de la deuxième nappe de travail, exprimée en mm et mesurée dans la direction radiale ;

les caractéristiques D1, D2, d1, d2, E1, E2 étant mesurées dans la partie centrale de l'armature de sommet du bandage à l'état vulcanisé, de part et d'autre du plan médian sur une largeur axiale totale de 4 cm.

Grâce à l'invention et comme le démontrent les résultats comparatifs décrits dans la présente description, l'invention rend possible de concevoir des bandages présentant une masse moindre que le premier état de la technique et une résistance au flambage supérieure à celle du deuxième état de la technique. Ces bandages sont utilisables dans la plupart des utilisations, notamment pour des véhicules de tourisme incluant notamment les véhicules 4x4 et "SUV" (Sport Utility Vehicles) ou pour véhicule camionnette. En effet, les inventeurs à l'origine de l'invention émettent, a posteriori, l'hypothèse que la résistance au flambage est fortement dépendante de la rigidité de flexion de chaque nappe de travail et que cette rigidité de flexion est très largement dépendante de la densité des monofilaments, et dans une moindre mesure, de leurs diamètres et de l'épaisseur de la nappe conformément aux relations I et II contrairement à ce que laissaient penser les premier et deuxième états de la technique, à savoir que la rigidité de flexion est principalement dépendante de l'épaisseur de la nappe. Ainsi, grâce à l'invention, on peut compenser une forte réduction de l'épaisseur de la nappe par une petite augmentation du diamètre des monofilaments et/ou une augmentation plus importante de leur densité.

En outre, le coût de fabrication de tels bandage est réduit par rapport à des bandages dans lesquels les éléments de renfort sont des assemblages de plusieurs monofilaments métalliques, par exemple de structure 2.30, l'utilisation de monofilaments en acier ne nécessitant aucune opération d'assemblage préalable.

Par direction axiale, on entend la direction sensiblement parallèle à l'axe de rotation du bandage.

Par direction circonférentielle, on entend la direction qui est sensiblement perpendiculaire à la fois à la direction axiale et à un rayon du bandage (en d'autres termes, tangente à un cercle dont le centre est sur l'axe de rotation du bandage).

Par direction radiale, on entend la direction selon un rayon du bandage, c'est-à-dire une direction quelconque intersectant l'axe de rotation du pneumatique et sensiblement perpendiculairement à cet axe.

Par plan circonférentiel médian (noté M), on entend le plan perpendiculaire à l'axe de rotation du pneumatique qui est situé à mi-distance des deux bourrelets et passe par le milieu de l'armature de sommet.

L'axe principal des monofilaments est la direction selon laquelle s'étendent longitudinalement les monofilaments. Dans le cas de monofilaments s'étendant rectilignement, l'axe principal est l'axe de chaque monofilament. Dans le cas de monofilaments s'étendant de façon ondulée, l'axe principal est l'axe neutre de part et d'autre duquel oscille chaque monofilament.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

Par monofilament, on entend ici tout filament unitaire, quelle que soit la forme de sa section droite, dont le diamètre ou l'épaisseur D est supérieur à 100 $\mu$m, D représentant la plus petite dimension de sa section droite lorsque cette dernière n'est pas circulaire. Cette définition couvre donc aussi bien des monofilaments de forme essentiellement cylindrique (à section droite circulaire) que des monofilaments de forme différente, par exemple des monofilaments oblongs (de forme aplatie) ; dans le deuxième cas (section non circulaire), le rapport de la plus grande dimension sur la plus petite dimension de la section droite est de préférence inférieur à 50, plus préférentiellement inférieur à 30, en particulier inférieur à 20.

Par métallique, on entend que le monofilament est réalisé, pour plus de 50% de sa masse dans un matériau métallique. Plus préférentiellement, le monofilament comprend une âme en acier. L'âme en acier est monolithique, c'est-à-dire qu'elle est par exemple venue de matière ou de moulage. Dans un mode de réalisation préféré, l'âme en acier est revêtu d'une couche de revêtement métallique réalisé dans un métal différent de l'acier afin d'améliorer par exemple les propriétés de mise en œuvre du monofilament, ou les propriétés d'usage du monofilament et/ou du bandage eux-mêmes, telles que les propriétés d'adhésion, de résistance à la corrosion ou encore de résistance au vieillissement. Par exemple, le métal de la couche du revêtement métallique est choisi parmi le zinc, le cuivre, l'étain et les alliages de ces métaux. Comme exemples d'alliages de ces métaux, on citera le laiton et le bronze. L'acier peut présenter une microstructure perlitique, ferritique, austénitique, bainitique, martensitique ou une microstructure issue d'un mélange de ces microstructures.

Selon un mode de réalisation préférentiel, lorsqu'un acier au carbone est utilisé, sa teneur en carbone (% en poids d'acier) est comprise dans un domaine de 0,2% à 1,2% ; selon un autre mode de réalisation préférentiel, la teneur en carbone de l'acier est comprise dans un domaine de 0,6% à 0,8%. L'invention s'applique en particulier à des aciers du type steel cord à résistance normale (dit "NT" pour" Normal Tensile ") ou à haute résistance (dit "HT" pour " High Tensile "), les monofilaments possédant alors une résistance en traction (Rm) qui est de préférence supérieure à 2000 MPa, plus préférentiellement supérieure à 2500 MPa. L'allongement total à la rupture (At) de ces renforts, somme de l'allongement élastique et de l'allongement plastique, est de préférence supérieur à 2,0%.

Les mesures de force à la rupture, de résistance à la rupture notée Rm (en MPa) et d'allongement à la rupture noté At (allongement total en %) sont effectuées en traction selon la norme ISO 6892 de 1984.

Avantageusement, les premiers et deuxièmes éléments de renfort agencés les uns sensiblement parallèlement aux autres dans chaque première et deuxième nappe de travail sont noyés respectivement dans des première et deuxième matrices élastomériques.

Par matrice élastomérique, on entend une matrice à comportement élastomérique. Une telle matrice est avantageusement à base d'au moins un élastomère et d'un autre constituant.

De préférence, l'élastomère est un élastomère diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Chaque matrice élastomérique peut comporter un seul ou plusieurs élastomère(s) diénique(s), également tout ou partie des additifs habituellement utilisés dans les matrices destinées à la fabrication de bandages, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en oeuvre (processabilité) des compositions à l'état cru, des résines tackifiantes, des agents anti-réversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt, de nickel ou de lanthanide, un système de réticulation ou de vulcanisation.

De préférence, le système de réticulation de chaque matrice élastomérique est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce. Par pce, on entend parties en poids pour cent parties d'élastomère.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m2/g, de préférence de 30 à 400 m2/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque matrice élastomérique présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Dans l'invention, le fait de satisfaire l'une ou l'autre des relations I ou II permet d'obtenir l'effet technique désiré. Avantageusement et de façon optimale, le bandage satisfait les deux relations I et II et permet d'obtenir un effet technique supérieur.

Plus on augmente la valeur de $(D1^4 \times d1 \times 1000) / E1$ et/ou celle de $(D2^4 \times d2 \times 1000) / E2$, plus on améliore la résistance au flambage.

Selon l'invention, $(D1^4 \times d1 \times 1000) / E1 \geq 2050$ et/ou $(D2^4 \times d2 \times 1000) / E2 \geq 2050$. De façon préférée, le bandage satisfait les deux relations $(D1^4 \times d1 \times 1000) / E1 \geq 2050$ et $(D2^4 \times d2 \times 1000) / E2 \geq 2050$. Avec de telles valeurs, on favorise les nappes présentant à la fois une bonne résistance au flambage et une épaisseur relativement faible, ce qui participe à la réduction de l'hystérèse du pneumatique.

De préférence, $(D1^4 \times d1 \times 1000) / E1 \geq 2100$ et/ou $(D2^4 \times d2 \times 1000) / E2 \geq 2100$. De façon préférée, le bandage satisfait les deux relations $(D1^4 \times d1 \times 1000) / E1 \geq 2100$ et $(D2^4 \times d2 \times 1000) / E2 \geq 2100$. Avec de telles valeurs, on favorise les nappes présentant à la fois une bonne résistance au flambage et une épaisseur relativement faible, ce qui participe encore davantage à la réduction de l'hystérèse du pneumatique.

Dans un mode de réalisation correspondant à un compromis privilégiant une masse relativement faible, une résistance mécanique de l'armature de sommet relativement moyenne et un coût relativement faible, $2500 \geq (D1^4 \times d1 \times 1000) / E1$ et/ou $2500 \geq (D2^4 \times d2 \times 1000) / E2$. Dans une configuration optimale, on a $2500 \geq (D1^4 \times d1 \times 1000) / E1$ et $2500 \geq (D2^4 \times d2 \times 1000) / E2$. Au-dessus de la valeur 2500, on commence à trop favoriser la résistance au flambage par rapport à la masse de la nappe. Bien qu'une telle résistance au flambage soit souhaitable, elle n'est pas nécessaire dans la plupart des applications pneumatiques visées et on préfèrera favoriser une masse plus faible avec néanmoins une excellente résistance au flambage.

Avantageusement, D1 et/ou D2 va de 0,28 mm à 0,35 mm, de préférence de 0,29 mm à 0,33 mm et plus préférentiellement de 0,30 mm à 0,32 mm. Dans une configuration optimale, D1 et D2 vont de 0,28 mm à 0,35 mm, de préférence de 0,29 mm à 0,33 mm et plus préférentiellement de 0,30 mm à 0,32 mm. De tels intervalles de D1 et D2 sont particulièrement adaptés à des pneumatiques pour véhicule de tourisme.

Avantageusement, d1 et/ou d2 va de 70 à 180 monofilaments par décimètre, de préférence de 80 à 170 monofilaments par décimètre, plus préférentiellement de 100 à 150 monofilaments par décimètre. Dans une configuration optimale, d1 et d2 vont de 70 à 180 monofilaments par décimètre, de préférence de 80 à 170 monofilaments par décimètre, plus préférentiellement de 100 à 150 monofilaments par décimètre.

D'une part, plus la densité de monofilaments est élevée, plus l'endurance de la ou des nappes et donc du bandage est améliorée. D'autre part, au-delà d'un certain seuil de densité de monofilaments, il devient difficile de former les ponts de gomme entre les monofilaments, ce qui nuit à l'endurance de la ou des nappes et donc du bandage, en particulier en raison du clivage qui correspond à l'apparition de fissures se propageant entre chaque première et deuxième nappe de travail.

Dans un mode de réalisation favorisant une force à rupture relativement élevée de la nappe, $D1 \leq 0,31$ mm et $d1 \geq 125$ monofilaments par décimètre. De façon analogue, dans un mode de réalisation dans lequel $D2 \leq 0,31$ mm, $d2 \geq 125$ monofilaments par décimètre. De façon avantageusement optimale, $D1 \leq 0,31$ mm et $D2 \leq 0,31$ mm, $d1 \geq 125$ monofilaments par décimètre et $d2 \geq 125$ monofilaments par décimètre.

Dans un mode de réalisation favorisant une force à rupture modérée mais une formation des ponts de gomme plus facile, $D1 \geq 0,31$ mm et $d1 \leq 125$ monofilaments par décimètre. De façon analogue, dans un mode de réalisation dans lequel $D2 \geq 0,31$ mm et $d2 \leq 125$ monofilaments par décimètre. De façon avantageusement optimale, $D1 \geq 0,31$ mm et $D2 \geq 0,31$ mm, $d1 \leq 125$ monofilaments par décimètre et $d2 \leq 125$ monofilaments par décimètre

Avantageusement, E1 et/ou E2 est inférieur ou est inférieure à 0,75 mm, de préférence inférieure ou égale à 0,70 mm, plus préférentiellement inférieure ou égale à 0,60 mm et encore plus préférentiellement inférieure ou égale à 0,55 mm. Avantageusement, E1 et/ou E2 est supérieure ou égale à 0,40 mm, de préférence supérieure ou égale à 0,45 mm. Dans une configuration optimale, E1 et E2 sont inférieures à 0,75 mm, de préférence inférieures ou égales à 0,70 mm, plus préférentiellement inférieures ou égales à 0,60 mm et encore plus préférentiellement inférieures ou égales à 0,55 mm. Avantageusement, E1 et E2 sont supérieures ou égales à 0,40 mm, de préférence supérieures ou égales à 0,45 mm.

Plus l'épaisseur de la ou de chaque nappe est faible, plus l'hystérèse et donc plus la résistance au roulement est faible. Par ailleurs, les ponts de gomme entre les monofilaments permettent de reprendre correctement les efforts s'exerçant sur la ou chaque nappe. Toutefois, une épaisseur de nappe trop faible présente un risque important de présenter des ponts de gomme imparfaitement formés et donc une mauvaise reprise des efforts de la ou chaque nappe. D'autre part, une épaisseur de nappe trop faible présente le risque de rapprocher les monofilaments de la nappe radialement la plus à externe du bandage de l'armature de frettage. Lorsque que le bandage subit des agressions, notamment en milieu humide et sous l'effet du roulage, le bandage présente alors un risque de présence d'eau à proximité des éléments de renfort, ce qui favorise la corrosion de la nappe radialement la plus externe. Le fait de réduire l'épaisseur de la ou de chaque nappe a donc pour effet de rendre plus sensible le bandage à la corrosion.

Dans certains modes de réalisation dans lesquels on souhaite maximiser la durée de vie du bandage et notamment sa résistance à la corrosion, on choisira une épaisseur de nappe limitant les risques de corrosion.

Dans d'autres modes de réalisation dans lesquels on souhaite privilégier la réduction de l'hystérèse et de la résistance au roulement, cette sensibilité à la corrosion est secondaire et on privilégiera des épaisseurs de nappes relativement faibles.

Avantageusement, l'épaisseur moyenne Ey séparant radialement un premier élément de renfort et un deuxième élément renfort, mesurée dans la direction radiale, va de 0,10 à 0,45 mm, de préférence de 0,12 à 0,30 mm et plus préférentiellement de 0,15 à 0,23 mm. Cette distance d'éloignement entre les première et deuxième nappes impacte notamment l'inertie de flexion de l'armature de travail, une épaisseur Ey plus grande permettant une plus grande résistance au flambage de l'ensemble de l'armature de travail. En outre, plus l'épaisseur Ey est grande, moins sensibles sont les monofilaments à la corrosion. Enfin, une épaisseur plus élevée permettra un meilleur découplage mécanique entre les nappes de travail et donc une meilleure endurance de l'armature de sommet. A l'inverse, on ne souhaitera pas une épaisseur trop importante qui pénaliserait la masse et l'hystérèse de l'armature de sommet.

Comme pour les caractéristiques D1, D2, d1, d2, E1, E2, Ey est mesurée dans la partie centrale de l'armature de sommet du bandage à l'état vulcanisé, de part et d'autre du plan médian M sur une largeur axiale totale de 4 cm. Exprimé autrement, Ey est la moyenne des distances minimales Ey séparant « dos à dos » chaque premier élément de renfort du deuxième élément renfort qui lui est le plus proche dans la direction radiale, cette moyenne étant calculée sur l'ensemble des éléments de renfort présents dans la partie centrale de l'armature de travail, dans un intervalle axial s'étendant entre - 2 cm et + 2 cm par rapport au plan médian M.

Avantageusement, Ey et D1 vérifient la relation suivante :

$$0,20 \leq Ey / (Ey + D1) \leq 0,60,$$

de préférence $0,25 \leq Ey / (Ey + D1) \leq 0,50,$
et plus préférentiellement $0,33 \leq Ey / (Ey + D1) \leq 0,42.$

Avantageusement, Ey et D2 vérifient la relation suivante :

$$0,20 \leq Ey / (Ey + D2) \leq 0,60,$$

de préférence $0,25 \leq Ey / (Ey + D2) \leq 0,50,$
et plus préférentiellement $0,33 \leq Ey / (Ey + D2) \leq 0,42.$

Dans une configuration optimale, Ey, D1 et D2 vérifient les relations décrites ci-dessus. Ainsi, on maximise la résistance au flambage de l'ensemble de l'armature de somment tout en maintenant une masse et une hystérèse raisonnable de cette armature de sommet.

Dans un mode de réalisation préféré, les premiers éléments de renfort forment un angle allant de 10 à 45 degrés avec la direction circonférentielle.

Dans un mode de réalisation préféré, les deuxièmes éléments de renfort forment un angle allant de 10 et 45 degrés avec la direction circonférentielle.

Avantageusement, les premiers et deuxièmes éléments de renfort sont croisés entre eux entre la première nappe de travail et la deuxième nappe de travail. Ainsi, si l'angle que font les premiers éléments de renfort avec la direction circonférentielle est positif, l'angle que font les deuxièmes éléments de renfort avec cette même direction circonférentielle est négatif. Inversement, si l'angle que font les premiers éléments de renfort avec la direction circonférentielle est négatif, l'angle que font les deuxièmes éléments de renfort avec cette même direction circonférentielle est positif.

Dans un mode de réalisation préféré, l'angle que font les premiers éléments de renfort avec la direction circonférentielle est, en valeur absolue, sensiblement égal à l'angle que font les deuxièmes éléments de renfort avec cette même direction circonférentielle.

Dans un mode de réalisation, la force à rupture de la première nappe de travail et/ou la force à rupture de la deuxième nappe de travail va de 20000 N.dm$^{-1}$ à 33000 N.dm$^{-1}$, de préférence de 22000 N.dm$^{-1}$ à 32000 N.dm$^{-1}$, de préférence de 23000 N.dm$^{-1}$ à 32000 N.dm$^{-1}$. Dans une configuration optimale et préférentielle de ce mode de réalisation, la force à rupture de la première nappe de travail et la force à rupture de la deuxième nappe de travail vont de 20000 N.dm$^{-1}$ à 33000 N.dm$^{-1}$, de préférence de 23000 N.dm$^{-1}$ à 32000 N.dm$^{-1}$.

De telles forces à rupture de nappe permettent d'assurer une endurance satisfaisante à un coût relativement bas sans pour autant pénaliser le compromis recherché par l'invention. L'avantage de disposer d'une force rupture suffisante est qu'en cas de rupture partielle de la ou de chaque nappe sous l'effet du flambage ou des agressions, le bandage conserve une marge de sécurité avant toute perte d'intégrité. De telles forces à rupture permettent également de respecter certains tests réglementaires de type « breaking energy », ce test traduisant un usage sur des routes en mauvais état pouvant comporter des obstacles perforants.

Dans le mode de réalisation favorisant une force à rupture relativement élevée de la nappe et dans lequel D1 ≤ 0,31 mm, la force à rupture de la première nappe de travail va de 28000 N.dm$^{-1}$ à 32000 N.dm$^{-1}$. De façon analogue, dans le mode de réalisation dans lequel D2 ≤ 0,31 mm, la force à rupture de la deuxième nappe de travail va de 28000 N.dm$^{-1}$ à 32000 N.dm$^{-1}$. De façon avantageusement optimale, D1 ≤ 0,31 mm et D2 ≤ 0,31 mm, la force à rupture de la première nappe de travail et la force à rupture de la deuxième nappe de travail vont de 28000 N.dm$^{-1}$ à 32000 N.dm$^{-1}$.

Dans un mode de réalisation favorisant une force à rupture modérée mais une formation des ponts de gomme plus facile et dans lequel D1 ≥ 0,31 mm, la force à rupture de la première nappe de travail va de 23000 N.dm$^{-1}$ à 28000 N.dm$^{-1}$. De façon analogue, dans le mode de réalisation dans lequel D2 ≥ 0,31 mm, la force à rupture de la deuxième nappe de travail va de 23000 N.dm$^{-1}$ à 28000 N.dm$^{-1}$. De façon avantageusement optimale, D1 ≥ 0,31 mm et D2 ≥ 0,31 mm, la force à rupture de la première nappe de travail et la force à rupture de la deuxième nappe de travail vont de 23000 N.dm$^{-1}$ à 28000 N.dm$^{-1}$.

La force à rupture d'une nappe est mesurée en multipliant le nombre d'élément de renfort présents sur une longueur de 10 cm de la nappe selon la direction axiale par la force à rupture unitaire de chaque élément de renfort. La force à rupture unitaire de chaque élément de renfort est mesurée conformément à la norme ISO 6892 de 1984.

De préférence, le bandage comprend une armature de frettage comprenant au moins une nappe de frettage comprenant des éléments de renfort textiles agencés les uns sensiblement parallèlement aux autres dans la nappe de frettage. De préférence, ces éléments de renfort textiles sont noyés dans une troisième matrice élastomérique.

Les éléments de renfort textiles peuvent avoir toute forme connue, il peut s'agir certes de monofilaments mais le plus souvent ils sont constitués de fibres multifilamentaires retordues ensemble sous forme de cordes textiles.

Avantageusement, les éléments de renforts textiles formant un angle au plus égal à 10°, de préférence allant de 5° à 10° avec la direction circonférentielle.

Avantageusement, les éléments de renfort textiles sont thermorétractiles. Cela signifie qu'avec une hausse de la température, le matériau constitutif des éléments de renfort textiles se rétracte. La contraction thermique CT des éléments de renfort textiles, mesurée après 2 min à 185°C, est avantageusement inférieure à 7,5% dans les conditions énoncées ci-après du test et de préférence inférieure à 3,5%, plus préférentiellement inférieure à 3%, valeurs qui se sont révélées optimales pour la stabilité de fabrication et de dimensionnement des bandages, en particulier lors des phases de cuisson et refroidissement des ces dernières. La grandeur CT est mesurée, sauf précisions différentes, selon la norme ASTM D1204-08, par exemple sur un appareil du type « TESTRITE », sous une pré-tension dite standard de 0,5 cN/tex (donc ramenée au titre ou densité linéique de l'échantillon testé). A longueur constante, on mesure également le maximum de la force de contraction (notée $F_C$) à l'aide du test ci-dessus, cette fois à une température de 180°C et sous 3% d'élongation. Cette force de contraction $F_C$ est préférentiellement supérieure à 20 N (Newton). Une force de contraction élevée s'est révélée particulièrement favorable à la capacité de frettage des éléments de renfort textiles thermorétractiles, vis-à-vis de l'armature de sommet du bandage lorsque ce dernier s'échauffe sous une haute vitesse de roulage.

Les grandeurs CT et Fc ci-dessus peuvent être indistinctement mesurées sur les éléments de renfort textiles initiaux encollés avant leur incorporation dans la nappe et le bandage, ou bien mesurée sur ces éléments de renfort une fois extraits de la zone centrale du bandage vulcanisé et de préférence « dégommés » (c'est-à-dire débarrassés de la matrice d'élastomère dans laquelle ils sont noyés).

Tout matériau textile thermorétractile vérifiant les caractéristiques de contraction CT énoncées ci-dessus convient. De préférence, ce matériau textile thermorétractile est choisi dans le groupe constitué par les polyamides, les polyesters et les polycétones. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphtalate), PBT (polybutylène téréphthalate), PBN (polybutylène naphtalate), PPT (polypropylène téréphthalate), PPN (polypropylène naphtalate). Sont également utilisables, dans la mesure où ils vérifient la caractéristique CT préconisée, des renforts hybrides constitués de deux (au moins deux) matériaux différents tels que par exemple des câblés hybrides aramide/nylon, aramide/polyester, aramide/polycétone.

Dans un mode de réalisation, notamment applicable à des bandages destinés à un usage en compétition, la bande de roulement présente une épaisseur allant de 3 mm à 6 mm, de préférence de 3,5 mm à 4,5 mm. Dans un autre mode de réalisation également applicable à des bandages destinés à un usage en compétition, la bande de roulement présente une épaisseur allant de 5,5 mm à 7 mm. Dans ces modes de réalisation, plus l'épaisseur de la bande de roulement est faible, plus l'effort latéral exercé sur les nappes de travail est faible et plus le risque de flambage est réduit. En combinaison avec les caractéristiques de l'invention, de telles épaisseurs de bande de roulement sont particulièrement avantageuses car elles réduisent le risque de flambage de bandages fortement sollicités tels que les bandages destinés à un usage en compétition.

Dans un autre mode de réalisation, notamment applicable à des bandages destinés à des véhicules de tourisme, la bande de roulement présente une épaisseur allant de 7 mm à 10,5 mm, de préférence de 8 mm à 10 mm. De façon analogue au mode de réalisation précédent, en combinaison avec les caractéristiques de l'invention, de telles épaisseurs de bande de roulement sont particulièrement avantageuses car elles réduisent le risque de flambage de bandages particulièrement sensibilisés du fait d'une épaisseur de bande de roulement relativement importante.

Par épaisseur de bande de roulement, on entend la distance moyenne mesurée selon la direction radiale de part et d'autre du plan médian sur une largeur axiale totale de 4 cm entre, sur un bandage neuf, la surface externe de la bande de roulement destinée à entrer en contact avec le sol et la surface radialement externe de l'armature de sommet faisant l'interface avec la surface radialement interner de la bande de roulement.

L'invention ainsi que ses avantages seront aisément compris à la lumière de la description détaillée et des exemples de réalisation qui suivent, donnés uniquement à titre d'exemple non limitatif ainsi que des figures dans lesquelles :

- la figure 1 illustre une vue en coupe radiale (c'est-à-dire selon un plan contenant l'axe de rotation du pneumatique) d'un pneumatique conforme à l'invention, et
- la figure 2 est une vue de détail de l'armature de sommet du pneumatique de la figure 1.

## BANDAGE SELON UN PREMIER MODE DE REALISATION DE L'INVENTION

Dans les figures, on a représenté un repère X, Y, Z correspondant aux directions habituelles respectivement axiale (X), radiale (Y) et circonférentielle (Z) d'un bandage.

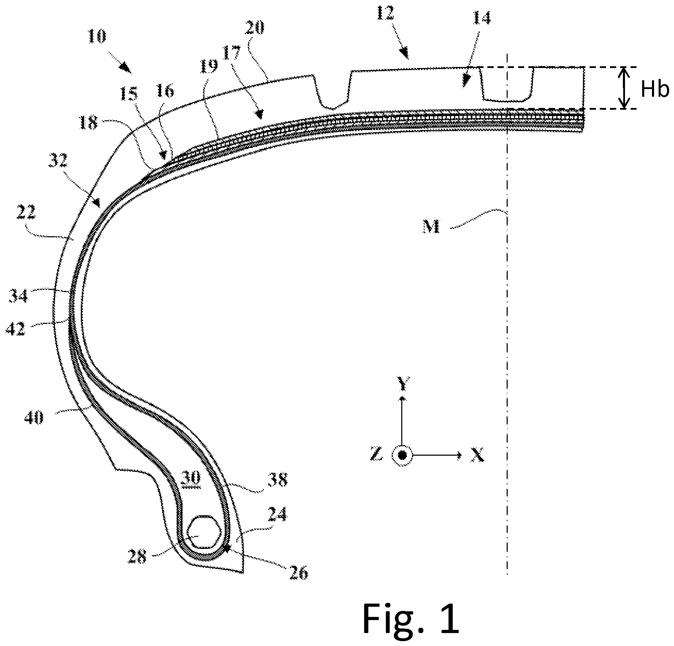

On a représenté sur la figure 1 un bandage, en l'espèce un bandage pneumatique, conforme à un premier mode de réalisation de l'invention et désigné par la référence générale 10. Le bandage 10 est sensiblement de révolution autour d'un axe sensiblement parallèle à la direction axiale X. Le bandage 10 est ici destiné à un véhicule de tourisme.

Le bandage 10 est de type radial et comporte un sommet 12 comprenant une bande de roulement 20 et une armature de sommet 14 s'étendant dans le sommet 12 selon la direction circonférentielle Z. L'armature de sommet 14 comprend une armature de travail 15 comprenant des première et deuxième nappes de travail 16, 18 et une armature 17 de frettage comprenant une nappe de frettage 19. L'armature de sommet 14 est surmontée de la bande de roulement 20. Ici, l'armature de frettage 17, ici la nappe de frettage 19, est radialement intercalée entre l'armature de travail 15 et la bande de roulement 20.

Le bandage comprend deux flancs 22 prolongeant le sommet 12 radialement vers l'intérieur. Le bandage 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est située radialement entre l'armature de carcasse 32 et la bande de roulement 20. Chaque flanc 22 relie chaque bourrelet 24 au sommet 12.

L'armature de carcasse 32 comporte de préférence une seule nappe de carcasse 34 d'éléments de renfort textiles radiaux. L'armature de carcasse 32 est ancrée dans chacun des bourrelets 24 par un retournement autour de la tringle 28 de manière à former dans chaque bourrelet 24 un brin aller 38 s'étendant depuis les bourrelets 24 à travers les flancs 22 jusque dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12.

Dans ce mode de réalisation la bande de roulement 20 présente une épaisseur Hb allant de 7 mm à 10,5 mm, de préférence de 8 mm à 10 mm. Ici, Hb=9 mm. Cette épaisseur Hb est la moyenne de 10 mesures effectuées de part et d'autre du plan médian sur une largeur axiale totale de 4 cm, sur le bandage 10 à l'état neuf, entre la surface externe de la bande de roulement 20 destinée à entrer en contact avec le sol et la surface radialement externe de l'armature de sommet 14, ici la surface radialement externe de l'armature de frettage 17, faisant l'interface avec la surface radialement interner de la bande de roulement 20. En variante, on pourrait envisager des épaisseurs Hb plus faibles, par exemple allant de 3 mm à 6 mm, de préférence de 3,5 mm à 4,5 mm ou également des épaisseurs Hb allant de 5,5 mm à 7 mm.

Chaque nappe de travail 16, 18, de frettage 19 et de carcasse 34 comprend une matrice élastomérique dans laquelle sont noyés des éléments de renfort de la nappe correspondante. Chaque matrice élastomérique, des nappes de travail 16, 18, de frettage 19 et de carcasse 34 est à base d'une composition conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

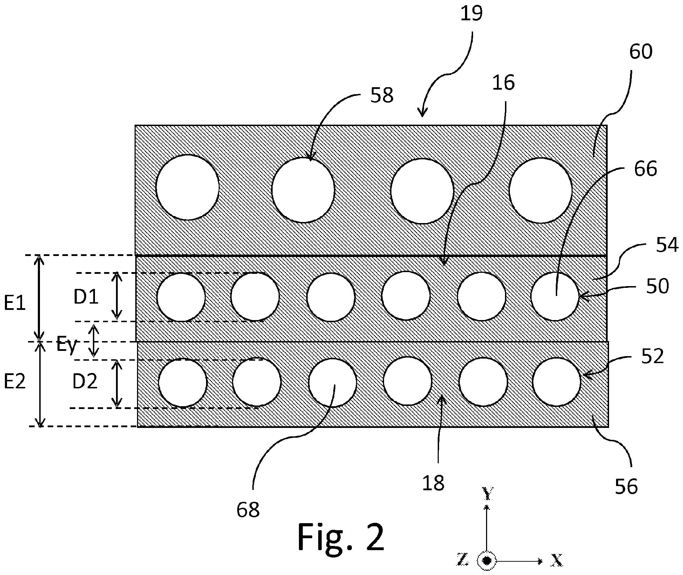

En l'espèce et en référence à la figure 2, chaque première et deuxième nappe de travail 16, 18 comprend respectivement des premiers et deuxièmes éléments de renfort 50, 52 agencés les uns sensiblement parallèlement aux autres dans chaque première et deuxième nappe de travail 16, 18 et noyés respectivement dans des première et deuxième matrices élastomériques 54, 56. Les premiers éléments de renfort 50 forment un angle allant de 10 à 45 degrés avec la direction circonférentielle Z du bandage 10. De façon analogue, les deuxièmes éléments de renfort 52 forment un angle allant de 10 à 45 degrés avec la direction circonférentielle Z du bandage 10. Les premiers et deuxièmes éléments de renfort 50, 52 sont croisés entre eux entre la première nappe de travail 16 et la deuxième nappe de travail 18. Ainsi, l'angle formé par les premiers éléments de renfort 50 et la direction circonférentielle Z est ici égal à +23° alors que l'angle formé par les deuxièmes éléments de renfort 52 et la direction circonférentielle Z est ici égal à -23°. Dans une variante, on pourrait envisager des angles respectivement égaux à +38° et -38°.

La nappe de frettage 19 comprend des éléments de renfort textiles 58 agencés les uns sensiblement aux autres dans la nappe de frettage 19 et noyés dans une troisième matrice élastomérique 60. Les éléments de renfort textiles 58 forment un angle au plus égal à 10°, de préférence allant de 5° à 10° avec la direction circonférentielle Z du bandage 10. En l'espèce, chaque élément de renfort textile est réalisé dans un matériau thermorétractile, ici en polyamide 66. Chaque élément de renfort textile comprend deux brins multifilamentaires réalisés dans un matériau thermorétractile, ici en polyamide 66, qui sont surtordus individuellement à 250 tours.m$^{-1}$ dans un sens puis retordus ensemble à 250 tours.m$^{-1}$ dans le sens opposé. Les deux brins multifilamentaires sont enroulés en hélice l'un autour de l'autre. Chaque brin multifilamentaire présente un titre égal à 140 tex. La contraction thermique CT de chaque élément de renfort textile de frettage est environ égale à environ 7%.

La nappe de carcasse 34 comprend des éléments de renfort textiles radiaux de carcasse agencés les uns sensiblement parallèlement aux autres et formant un angle allant de 65° à 90° avec la direction circonférentielle Z du bandage 10. En l'espèce, chaque élément de renfort textile de carcasse comprend deux brins multifilamentaires réalisés en polyester, ici en PET, qui sont surtordus individuellement à 420 tours.m$^{-1}$ dans un sens puis retordus ensemble à 420 tours.m$^{-1}$ dans le sens opposé. Les deux brins multifilamentaires de carcasse sont enroulés en hélice l'un autour de l'autre. Chaque brin multifilamentaire de carcasse présente un titre égal à 144 tex. Les éléments de renfort textiles radiaux sont noyés dans une matrice élastomérique.

Chaque premier et deuxième élément de renfort 50, 52 est constitué d'un monofilament métallique respectivement désigné par la référence 66, 68. Chaque monofilament métallique 66, 68 comprend une âme en acier revêtue d'une couche d'un revêtement métallique, par exemple du laiton ou du zinc. Chaque monofilament métallique 66, 68 présente respectivement un diamètre D1, D2 exprimé en mm, allant de 0,25 mm à 0,38 mm, de préférence de 0,28 à 0,35 mm, plus préférentiellement de 0,29 à 0,33 mm et encore plus préférentiellement de 0,30 mm à 0,32 mm et ici D1=D2=0,32 mm. L'acier est un acier au carbone de type HT ayant une résistance Rm égale à 2891 MPa pour un diamètre de 0,32 mm (soit 232 N).

Chaque densité d1, d2 des premiers éléments de renfort 56, 58 dans chaque première et deuxième nappe de travail 16, 18 exprimée en monofilaments par décimètre et mesurée dans une direction perpendiculaire à l'axe principal des monofilaments métalliques va de 70 à 180 monofilaments par décimètre, de préférence de 80 à 170 monofilaments par décimètre, plus préférentiellement de 100 à 150 monofilaments par décimètre. Ici, l'axe principal des monofilaments métalliques de chaque nappe de travail fait un angle égal à ±23° avec la direction circonférentielle Z. Comme ici D1 et D2 sont supérieurs ou égaux à 0,31 mm, d1 et d2 est inférieure ou égale à 125 monofilaments par décimètre et est ici telle que d1=d2=111 monofilaments par décimètre.

La force à rupture de chaque première et deuxième nappe de travail 56, 58 va de 20000 N.dm$^{-1}$ à 33000 N.dm$^{-1}$, de préférence de 23000 N.dm$^{-1}$ à 32000 N.dm$^{-1}$. Comme ici D1 et D2 sont supérieurs ou égaux à 0,31 mm, la force à rupture de chaque première et deuxième nappe de travail 56, 58 va de 23000 N.dm$^{-1}$ à 28000 N.dm$^{-1}$ et en l'espèce est égale à 25778 N.dm$^{-1}$.

L'épaisseur moyenne Ey séparant radialement un premier élément de renfort 56 et un deuxième élément renfort 58, mesurée dans la direction radiale Y, va de 0,10 à 0,45 mm, de préférence de 0,12 à 0,30 mm et plus préférentiellement de 0,15 à 0,23 mm. En l'espèce, Ey=0,18 mm. Ey et D1 vérifient la relation suivante $0,20 \leq Ey / (Ey + D1) \leq 0,60$, de préférence $0,25 \leq Ey / (Ey + D1) \leq 0,50$, et plus préférentiellement $0,33 \leq Ey / (Ey + D1) \leq 0,42$. En l'espèce, Ey / (Ey + D1) = 0,36. De façon analogue, Ey et D2 vérifient la relation suivante $0,20 \leq Ey / (Ey + D2) \leq 0,60$, de préférence 0,25 ≤ Ey / (Ey + D2) ≤ 0,50, et plus préférentiellement 0,33 ≤ Ey / (Ey + D2) ≤ 0,42. En l'espèce, Ey / (Ey + D2) = Ey / (Ey + D1) = 0,36.

Chaque épaisseur moyenne E1, E2 respectivement de chaque première et deuxième nappe de travail 16, 18, exprimée en mm et mesurée dans la direction radiale Y est inférieure à 0,75 mm, de préférence inférieure ou égale à 0,70 mm, plus préférentiellement inférieure ou égale à 0,60 mm et encore plus préférentiellement inférieure ou égale à 0,55 mm, et supérieure ou égale à 0,40 mm, de préférence supérieure ou égale à 0,45 mm. En l'espèce E1=E2=0,50 mm.

Avec les valeurs décrites ci-dessus, $(D1^4 \times d1 \times 1000) / E1= (D2^4 \times d2 \times 1000) / E2 = 2333$. Ainsi, on a $(D1^4 \times d1 \times 1000) / E1 \geq 2050$ et $(D2^4 \times d2 \times 1000) / E2 \geq 2050$. On a même $(D1^4 \times d1 \times 1000) / E1 \geq 2200$ et $(D2^4 \times d2 \times 1000) / E2 \geq 2200$. Dans ce premier mode de réalisation, on a également $2500 \geq (D1^4 \times d1 \times 1000) / E1 \geq 2200$ et $2500 \geq (D2^4 \times d2 \times 1000) / E2 \geq 2200$.

Conformément à l'invention, les relations I et II sont satisfaites.

Les caractéristiques D1, D2, d1, d2, E1, E2 et Ey sont mesurées dans la partie centrale de l'armature de sommet 14 du bandage 10 à l'état vulcanisé, de part et d'autre du plan médian M sur une largeur axiale totale de 4 cm. L'ensemble des mesures est moyennées sur une distance axiale totale comprise entre - 2,0 cm et + 2,0 cm par rapport au centre de l'armature de travail.

## BANDAGE SELON UN DEUXIEME MODE DE REALISATION DE L'INVENTION

On va maintenant décrire un deuxième mode de réalisation de l'invention en référence au premier mode de réalisation. Ainsi, pas soucis de concision, on décrira, sauf mention contraire, uniquement les caractéristiques qui diffèrent de celles du bandage selon le premier mode de réalisation.

A la différence du premier mode de réalisation, chaque monofilament métallique 66, 68 présente respectivement un diamètre D1=D2≤0,31 mm et ici égal à 0,30 mm. L'acier utilisé est de type HT et présente une résistance Rm égale à 2926 MPa pour un diamètre de 0,30 mm (soit 207 N).

Chaque densité d1, d2 des premiers éléments de renfort 56, 58 est supérieur à 125 monofilaments par décimètre et est ici telle que d1=d2=143 monofilaments par décimètre. La force à rupture de chaque première et deuxième nappe de travail 56, 58 va de 28000 N.dm$^{-1}$ à 32000 N.dm$^{-1}$ et est ici égale à 29571 N.dm$^{-1}$. L'épaisseur moyenne Ey séparant radialement un premier élément de renfort 56 et un deuxième élément renfort 58 est Ey=0,20 mm. Ey, D1 et D2 sont tels Ey / (Ey + D1) = Ey / (Ey + D2) = 0,40. Chaque épaisseur moyenne E1, E2 est telle que E1=E2=0,50 mm.

Avec les valeurs décrites ci-dessus, $(D1^4 \times d1 \times 1000) / E1= (D2^4 \times d2 \times 1000) / E2 = 2333$ et les relations I et II sont satisfaites conformément à l'invention.

Tout comme dans le premier mode de réalisation, on a également $(D1^4 \times d1 \times 1000) / E1 \geq 2200$ et $(D2^4 \times d2 \times 1000) / E2 \geq 2200$ ainsi que $2500 \geq (D1^4 \times d1 \times 1000) / E1 \geq 2200$ et $2500 \geq (D2^4 \times d2 \times 1000) / E2 \geq 2200$.

## ESSAIS COMPARATIFS

Les essais qui suivent démontrent que les nappes de travail de bandages conformes à l'invention permettent d'obtenir une masse moindre que le premier état de la technique et une résistance au flambage supérieure à celle du deuxième état de la technique grâce à la combinaison spécifique de monofilaments présentant des diamètres choisis en fonction de leur densité et de l'épaisseur de la nappe de travail correspondante.

Lors de ces essais comparatifs, on a testé la résistance au flambage des armatures de travail des pneumatiques T1, T2 présentés dans le préambule de la présente demande, de pneumatiques T3 à T13, P3, P4, P9 à P12, P15, P16, P19 à P21 non conformes à l'invention et de pneumatiques P1, P2, P5 à P8, P13, P14, P17 et P18 conformes à l'invention, notamment des pneumatiques P8 et P14 conformes respectivement aux premier et deuxième modes de réalisation.

Les conditions d'usage pouvant générer un flambage de l'armature de sommet du bandage correspondent à des sollicitations en virage avec des accélérations relativement importantes d'au moins 0.7 g. Ces accélérations peuvent être plus importantes dans certain cas d'usage de type compétition car dans ce cas les appuis aérodynamiques peuvent permettre de générer des efforts verticaux aérodynamiques permettant de générer des efforts latéraux supérieurs à 1 g. Le bandage le plus sollicité est alors celui qui est extérieur au virage et on considère généralement que l'effort latéral généré sur le bandage est proportionnel à l'effort vertical.

Cet effort vertical comprend la charge verticale portée par le bandage à l'arrêt ou en ligne droite plus le report de charge. L'effort vertical généré sur le bandage s'exprime par la relation suivante :

$$Fz = Fz0 \left( 1 + \frac{\gamma_T}{g} \cdot \frac{H}{V} \right)$$

dans laquelle Fz0 est la charge verticale et $FZ0.\gamma_T/g.H/V$ est le report de charge

L'effort latéral généré sur le bandage est proportionnel à l'effort vertical et s'exprime alors par la relation suivante :

$$Fy = F_z 0 \cdot \frac{\gamma_T}{g}\left(1 + \frac{\gamma_T}{g}\cdot\frac{H}{V}\right)$$

Pour évaluer le flambage, on procède à des roulages en considérant une charge de référence et en appliquant des couples d'effort (Fy,Fz) sur machine ou sur véhicule de façon incrémentale à différents kilométrages. Une analyse des bandages en fonction de ces sollicitations et des kilométrages permet de savoir si un flambage a pu générer des ruptures des nappes de travail. Le niveau de performance est mesuré au travers du kilométrage parcouru sans rupture.

Les résultats au test de flambage sont indiqués en base 100 par rapport à un pneumatique comprenant des nappes de travail comprenant des éléments de renfort constitués par des assemblages de 2 filaments de 0,30 mm de type HT à une densité de 83 fils par décimètre. Une valeur supérieure à 100 signifie que la nappe présente une résistance au flambage améliorée, c'est-à-dire un kilométrage parcouru supérieur, et une valeur inférieure à 100 signifie que la nappe présente une résistance au flambage détériorée, c'est-à-dire un kilométrage parcouru inférieur.

Concernant la masse, les résultats sont indiqués en base 100 par rapport aux nappes de travail du pneumatique T1. Une valeur supérieure à 100 signifie que la nappe présente une masse supérieure à la masse d'une nappe du pneumatique T1 et une valeur inférieure à 100 signifie que la nappe présente une masse inférieure à la masse d'une nappe du pneumatique T1.

Les résultats à ce test de flambage sont rassemblés dans les tableaux 1 à 4 ci-après (ligne RF) ainsi que le diamètre D des monofilaments métalliques de chaque nappe de travail (qui sont identiques), l'épaisseur E de chaque nappe de travail (qui sont identiques), l'épaisseur Ey, l'indicateur (D$^4$ × d) / E de chaque nappe de travail (qui sont identiques), les valeurs calculées de -3324 × E + 3650, -3324 × E + 3800, -3324 × E + 3950, -3998 × E + 4547 et la force à rupture de chaque nappe de travail (qui sont identiques).

La comparaison des pneumatiques T1 et T2 confirme que le pneumatique T2 présente une masse plus faible que le pneumatique T1 mais cela est au détriment de la résistance au flambage RF pour laquelle le pneumatique T1 est bien meilleur.

La comparaison des pneumatiques T1 à T13 et des pneumatiques conformes à l'invention montre que tous les pneumatiques P1, P2, P5 à P8, P13, P14, P17 et P18 conformes à l'invention présentent tous une résistance au flambage RF améliorée par rapport aux pneumatiques T2 à T13. Lorsque les pneumatiques selon l'invention, par exemple P1 et P2, présentent une masse comparable à celle du pneumatique T2, la résistance au flambage est significativement améliorée.

Les pneumatiques selon l'invention présentent tous une résistance au flambage inférieure à celle du pneumatique T1. Toutefois, tous les pneumatiques selon l'invention présentent une masse significativement moindre à celle du pneumatique T1.

L'invention ne se limite pas aux modes de réalisation précédemment décrits. En effet, on pourra envisager des modes de réalisation dans lesquelles une seule des deux nappes de travail satisfait les conditions décrites.

**Tableau 1**

|  | T1 | T2 | P1 | P2 | P3 | P4 |
|---|---|---|---|---|---|---|
| **D(mm)** | 0,32 | 0,30 | 0,35 | | | |
| **E(mm)** | 0,75 | 0,48 | 0,45 | 0,50 | 0,60 | 0,70 |
| **Ey(mm)** | 0,43 | 0,18 | 0,1 | 0,15 | 0,25 | 0,35 |
| **d(unité/dm)** | 143 | 111 | 80 | 80 | 80 | 80 |
| **-3324 x E +3650** | 1141 | 2059 | 2154 | 1988 | 1656 | 1323 |
| **-3324 x E +3800** | 1291 | 2209 | 2304 | 2138 | 1806 | 1473 |
| **-3324 × E + 3950** | 1441 | 2359 | 2454 | 2288 | 1956 | 1623 |
| **(D$^4$ x d x 1000)/E** | 1984 | 1881 | 2686 | 2416 | 2011 | 1722 |
| **-3998x E + 4547** | 1529 | 2634 | 2748 | 2548 | 2148 | 1748 |
| **RF** | 107 | 63 | 84 | 84 | 85 | 85 |
| **Masse de la nappe** | 100 | 68 | 67 | 67 | 67 | 67 |

**Tableau 2**

|  | T1 | T2 | P5 | P6 | P7 | P8 | P9 | P10 | P11 | P12 |
|---|---|---|---|---|---|---|---|---|---|---|
| D (mm) | 0,32 | 0,30 | 0,32 | | | | | | | |
| E (mm) | 0,75 | 0,48 | 0,45 | | 0,50 | | 0,60 | | 0,70 | |
| Ey (mm) | 0,43 | 0,18 | 0,13 | | 0,18 | | 0,28 | | 0,38 | |
| d (unite/dm) | 143 | 111 | 100 | 111 | 100 | 111 | 100 | 111 | 100 | 111 |
| $-3324 \times E1 + 3650$ | 1141 | 2059 | 2154 | | 1988 | | 1656 | | 1323 | |
| $-3324 \times E1 + 3800$ | 1291 | 2209 | 2304 | | 2138 | | 1806 | | 1473 | |
| $-3324 \times E1 + 3950$ | 1441 | 2359 | 2454 | | 2288 | | 1956 | | 1623 | |
| $(D^4 \times d \times 1000) / E$ | 1984 | 1881 | 2328 | 2593 | 2095 | 2333 | 1746 | 1944 | 1497 | 1666 |
| $-3998 \times E + 4547$ | 1529 | 2634 | 2748 | | 2548 | | 2148 | | 1748 | |
| RF | 107 | 63 | 73 | 81 | 74 | 82 | 74 | 82 | 75 | 83 |
| Masse de la nappe | 100 | 68 | 70 | 78 | 70 | 78 | 70 | 78 | 70 | 78 |

**Tableau 3**

| | T1 | T2 | T3 | T4 | P13 | T5 | T6 | P14 | T7 | T8 | P15 | T9 | T10 | P16 |
|---|---|---|---|---|---|---|---|---|---|---|---|---|---|---|
| **D (mm)** | 0,32 | 0,30 | 0,30 | | | | | | | | | | | |
| **E (mm)** | 0,75 | 0,48 | 0,45 | | | 0,50 | | | 0,60 | | | 0,70 | | |
| **Ey (mm)** | 0,43 | 0,18 | 0,15 | | | 0,20 | | | 0,30 | | | 0,40 | | |
| **d (unité/dm)** | 143 | 111 | 100 | 111 | 143 | 100 | 111 | 143 | 100 | 111 | 143 | 100 | 111 | 143 |
| **-3324 × E1 + 3650** | 1141 | 2059 | 2154 | | | 1988 | | | 1656 | | | 1323 | | |
| **-3324 × E1 + 3800** | 1291 | 2209 | 2304 | | | 2138 | | | 1806 | | | 1473 | | |
| **-3324 × E1 + 3950** | 1441 | 2359 | 2454 | | | 2288 | | | 1956 | | | 1623 | | |
| **D$^4$ × d × 1000) / E** | 1984 | 1881 | 1797 | 2007 | 2566 | 1618 | 1805 | 2310 | 1348 | 1504 | 1925 | 1156 | 1288 | 1651 |
| **-3998× E + 4547** | 1529 | 2634 | 2748 | | | 2548 | | | 2148 | | | 1748 | | |
| **RF** | 107 | 63 | 57 | 63 | 81 | 57 | 63 | 81 | 58 | 64 | 82 | 58 | 65 | 83 |
| **Masse de la nappe** | 100 | 68 | 62 | 68 | 88 | 62 | 68 | 88 | 62 | 68 | 88 | 62 | 68 | 88 |

**Tableau 4**

| | T1 | T2 | P17 | T11 | P18 | T12 | P19 | T13 | P20 | P21 |
|---|---|---|---|---|---|---|---|---|---|---|
| | 0,32 | 0,30 | 0,28 | | | | | | | |
| E (mm) | 0,75 | 0,48 | 0,40 | | 0,45 | 0,50 | | 0,60 | | 0,70 |
| Ey (mm) | 0,43 | 0,18 | 0,12 | 0,17 | 0,17 | 0,22 | 0,22 | 0,32 | 0,32 | 0,40 |
| d (unité/dm) | 143 | 111 | 167 | 154 | 167 | 154 | 167 | 154 | 167 | 167 |
| -3324 × E1 + 3650 | 1141 | 2059 | 2320 | | 2154 | 1988 | | 1656 | | 1323 |
| -3324 × E1 + 3800 | 1291 | 2209 | 2470 | | 2304 | 2138 | | 1806 | | 1473 |
| -3324 × E1 + 3950 | 1441 | 2359 | 2620 | | 2454 | 2288 | | 1956 | | 1623 |
| D$^4$ × d × 1000) / E | 1984 | 1881 | 2544 | 2080 | 2263 | 1874 | 2038 | 1564 | 1700 | 1458 |
| -3998× E + 4547 | 1529 | 2634 | 2948 | | 2748 | 2548 | | 2148 | | 1748 |
| RF | 107 | 63 | 72 | 66 | 72 | 62 | 72 | 62 | 73 | 73 |
| Masse de la nappe | 100 | 68 | 89 | 82 | 89 | 82 | 89 | 82 | 89 | 89 |

## Revendications

**1.** Bandage (10), définissant trois directions principales, circonférentielle, axiale et radiale, comportant un sommet (12) comprenant une bande de roulement (20), deux flancs (22), deux bourrelets (24), chaque flanc (22) reliant chaque bourrelet (24) au sommet (12), une armature de carcasse (32) ancrée dans chacun des bourrelets (24) et s'étendant dans les flancs (22) et dans le sommet (12), une armature de sommet (14) s'étendant dans le sommet (12) selon la direction circonférentielle (Z) et situé radialement entre l'armature de carcasse (32) et la bande de roulement (20), l'armature de sommet (14) comprenant une armature de travail (15) comprenant au moins des première et deuxième nappes de travail (16, 18), chaque première et deuxième nappe de travail (16, 18) comprenant respectivement des premiers et deuxièmes éléments de renfort (50, 52) agencés les uns sensiblement parallèlement aux autres dans chaque première et deuxième nappe de travail (16, 18), **caractérisé en ce qu'**au moins l'une des relations I ou II suivantes est satisfaite :

$$2050 \leq (D1^4 \times d1 \times 1000) / E1 \leq -3998 \times E1 + 4547 \qquad (I)$$

avec :

- D1 étant le diamètre de chaque premier élément de renfort (50) constitué d'un monofilament métallique (66), exprimé en mm, D1 allant de 0,25 mm à 0,38 mm,
- d1 étant la densité des premiers éléments de renfort (50) dans la première nappe de travail (16), exprimée en monofilaments par décimètre et mesurée dans une direction perpendiculaire à l'axe principal des monofilaments métalliques (66),
- E1 étant l'épaisseur moyenne de la première nappe de travail (16), exprimée en mm et mesurée dans la direction radiale (Y) ;

$$2050 \leq (D2^4 \times d2 \times 1000) / E2 \leq -3998 \times E2 + 4547 \qquad (II)$$

avec

- D2 étant le diamètre de chaque deuxième élément de renfort (52) constitué d'un monofilament métallique (68), exprimé en mm, D2 allant de 0,25 mm à 0,38 mm,
- d2 étant la densité des deuxièmes éléments de renfort (52) dans la deuxième nappe de travail (18), exprimée en monofilaments par décimètre et mesurée dans une direction perpendiculaire à l'axe principal des monofilaments métalliques (68),

- E2 étant l'épaisseur moyenne de la deuxième nappe de travail (18), exprimée en mm et mesurée dans la direction radiale (Y) ;

les caractéristiques D1, D2, d1, d2, E1, E2 étant mesurées dans la partie centrale de l'armature de sommet (14) du bandage (20) à l'état vulcanisé, de part et d'autre du plan médian (M) sur une largeur axiale totale de 4 cm.

2. Bandage (10) selon la revendication précédente, dans lequel

$$(D1^4 \times d1 \times 1000) / E1 \leq 2500 \quad \text{et/ou} \quad (D2^4 \times d2 \times 1000) / E2 \leq 2500$$

3. Bandage (10) selon l'une quelconque des revendications précédentes, dans lequel D1 et/ou D2 va de 0,25 mm à 0,38 mm, de préférence de 0,28 à 0,35 mm, plus préférentiellement de 0,29 à 0,33 mm et encore plus préférentiellement de 0,30 mm à 0,32 mm.

4. Bandage (10) selon l'une quelconque des revendications précédentes, dans lequel d1 et/ou d2 va de 70 à 180 monofilaments par décimètre, de préférence de 80 à 170 monofilaments par décimètre, plus préférentiellement de 100 à 150 monofilaments par décimètre.

5. Bandage (10) selon l'une quelconque des revendications précédentes, dans lequel E1 et/ou E2 est inférieure à 0,75 mm, de préférence inférieure ou égale à 0,70 mm, plus préférentiellement inférieure ou égale à 0,60 mm et encore plus préférentiellement inférieure ou égale à 0,55 mm.

6. Bandage (10) selon l'une quelconque des revendications précédentes, dans lequel E1 et/ou E2 est supérieure ou égale à 0,40 mm, de préférence supérieure ou égale à 0,45 mm.

7. Bandage (10) selon l'une quelconque des revendications précédentes, dans lequel l'épaisseur moyenne Ey séparant radialement un premier élément de renfort et un deuxième élément renfort, mesurée dans la direction radiale (Y), va de 0,10 à 0,45 mm, de préférence de 0,12 à 0,30 mm et plus préférentiellement de 0,15 à 0,23 mm.

8. Bandage (10) selon la revendication précédente, dans lequel Ey et D1 vérifient la relation suivante :

$$0,20 \leq Ey / (Ey + D1) \leq 0,60,$$

de préférence $0,25 \leq Ey / (Ey + D1) \leq 0,50,$
et plus préférentiellement $0,33 \leq Ey / (Ey + D1) \leq 0,42.$

9. Bandage (10) selon la revendication 7 ou 8, dans lequel Ey et D2 vérifient la relation suivante :

$$0,20 \leq Ey / (Ey + D2) \leq 0,60,$$

de préférence $0,25 \leq Ey / (Ey + D2) \leq 0,50,$
et plus préférentiellement $0,33 \leq Ey / (Ey + D2) \leq 0,42.$

10. Bandage (10) selon l'une quelconque des revendications précédentes, dans lequel les premiers éléments de renfort (50) forment un angle allant de 10 à 45 degrés avec la direction circonférentielle (Z).

11. Bandage (10) selon l'une quelconque des revendications précédentes, dans lequel les deuxièmes éléments de renfort (50) forment un angle allant de 10 à 45 degrés avec la direction circonférentielle (Z).

12. Bandage (10) selon l'une quelconque des revendications précédentes, dans lequel la force à rupture de la première nappe de travail (16) et/ou la force à rupture de la deuxième nappe de travail (18) va de 20000 N.dm$^{-1}$ à 33000 N.dm$^{-1}$, de préférence de 22000 N.dm$^{-1}$ à 32000 N.dm$^{-1}$ et plus préférentiellement de 23000 N.dm$^{-1}$ à 32000 N.dm$^{-1}$, la mesure de la force à rupture étant effectuée en traction selon la norme ISO 6892 de 1984.

13. Bandage selon l'une quelconque des revendications 1 à 12, dans lequel la bande de roulement (20) présente une épaisseur (Hb) allant de 3 mm à 6 mm, de préférence de 3,5 mm à 4,5 mm.

14. Bandage selon l'une quelconque des revendications 1 à 12, dans lequel la bande de roulement (20) présente une épaisseur (Hb) allant de 5,5 mm à 7 mm.

15. Bandage selon l'une quelconque des revendications 1 à 12, dans lequel la bande de roulement (20) présente une épaisseur (Hb) allant de 7 mm à 10,5 mm, de préférence de 8 mm à 10 mm.

**Patentansprüche**

1. Reifen (10), der drei Hauptrichtungen, Umfangs-, axiale und radiale Richtung, definiert, der einen einen Laufstreifen (20) aufweisenden Scheitel (12), zwei Flanken (22), zwei Wülste (24), wobei jede Flanke (22) jeden Wulst (24) mit dem Scheitel verbindet (12), eine Karkassenbewehrung (32), die in jedem der Wülste (24) verankert ist und sich in den Flanken (22) und im Scheitel (12) erstreckt, eine Scheitelbewehrung (14) aufweist, die sich im Scheitel (12) gemäß der Umfangsrichtung (Z) erstreckt und sich radial zwischen der Karkassenbewehrung (32) und dem Laufstreifen (20) befindet, wobei die Scheitelbewehrung (14) eine Arbeitsbewehrung (15) enthält, die mindestens erste und zweite Arbeitslagen (16, 18) enthält, wobei jede erste und zweite Arbeitslage (16, 18) je erste und zweite Verstärkungselemente (50, 52) enthält, die im Wesentlichen parallel zueinander in jeder ersten und zweiten Arbeitslage (16, 18) angeordnet sind, **dadurch gekennzeichnet, dass** mindestens eine der folgenden Beziehungen I oder II erfüllt wird:

$$2050 \leq (D1^4 \times d1 \times 1000)/E1 \leq -3998 \times E1 + 4547 \quad (I)$$

mit:

- D1 dem Durchmesser jedes ersten Verstärkungselements (50) bestehend aus einem metallischen Monofilament (66), ausgedrückt in mm, wobei D1 von 0,25 mm bis 0,38 mm geht,
- d1 der Dichte der ersten Verstärkungselemente (50) in der ersten Arbeitslage (16), ausgedrückt in Monofilamenten pro Dezimeter und gemessen in einer Richtung lotrecht zur Hauptachse der metallischen Monofilamente (66),
- E1 der mittleren Dicke der ersten Arbeitslage (16), ausgedrückt in mm und gemessen in der radialen Richtung (Y);

$$2050 \leq (D2^4 \times d2 \times 1000)/E2 \leq -3998 \times E2 + 4547 \quad (II)$$

mit:

- D2 dem Durchmesser jedes zweiten Verstärkungselements (52) bestehend aus einem metallischen Monofilament (68), ausgedrückt in mm, wobei D2 von 0,25 mm bis 0,38 mm geht,
- d2 der Dichte der zweiten Verstärkungselemente (52) in der zweiten Arbeitslage (18), ausgedrückt in Monofilamenten pro Dezimeter und gemessen in einer Richtung lotrecht zur Hauptachse der metallischen Monofilamente (68),
- E2 der mittleren Dicke der zweiten Arbeitslage (18), ausgedrückt in mm und gemessen in der radialen Richtung (Y);

wobei die Merkmale D1, D2, d1, d2, E1, E2 im zentralen Bereich der Scheitelbewehrung (14) des Reifens (20) im vulkanisierten Zustand zu beiden Seiten der Mittelebene (M) über eine axiale Gesamtbreite von 4 cm gemessen werden.

2. Reifen (10) nach dem vorhergehenden Anspruch, wobei gilt

$$(D1^4 \times d1 \times 1000)/E1 \leq 2500$$

und/oder

$$(D2^4 \times d2 \times 1000)/E2 \leq 2500.$$

3. Reifen (10) nach einem der vorhergehenden Ansprüche, wobei D1 und/oder D2 von 0,25 mm bis 0,38 mm gehen, vorzugsweise von 0,28 bis 0,35 mm, bevorzugter von 0,29 bis 0,33 mm und noch bevorzugter von 0,30 mm bis 0,32 mm.

4. Reifen (10) nach einem der vorhergehenden Ansprüche, wobei d1 und/oder d2 von 70 bis 180 Monofilamente pro Dezimeter, vorzugsweise von 80 bis 170 Monofilamente pro Dezimeter, bevorzugter von 100 bis 150 Monofilamente pro Dezimeter gehen.

5. Reifen (10) nach einem der vorhergehenden Ansprüche, wobei E1 und/oder E2 weniger als 0,75 mm, vorzugsweise weniger als oder gleich 0,70 mm, bevorzugter weniger als oder gleich 0,60 mm und noch bevorzugter weniger als oder gleich 0,55 mm betragen.

6. Reifen (10) nach einem der vorhergehenden Ansprüche, wobei E1 und/oder E2 mehr als oder gleich 0,40 mm, vorzugsweise mehr als oder gleich 0,45 mm betragen.

7. Reifen (10) nach einem der vorhergehenden Ansprüche, wobei die ein erstes Verstärkungselement und ein zweites Verstärkungselement radial trennende mittlere Dicke Ey, gemessen in radialer Richtung (Y), von 0,10 bis 0,45 mm, vorzugsweise von 0,12 bis 0,30 mm und bevorzugter von 0,15 bis 0,23 mm geht.

8. Reifen (10) nach dem vorhergehenden Anspruch, wobei Ey und D1 die folgende Beziehung erfüllen:

$$0,20 \leq Ey/(Ey + D1) \leq 0,60,$$

vorzugsweise $0,25 \leq Ey/(Ey + D1) \leq 0,50$,
und bevorzugter $0,33 \leq Ey/(Ey + D1) \leq 0,42$.

9. Reifen (10) nach Anspruch 7 oder 8, wobei Ey und D2 die folgende Beziehung erfüllen:

$$0,20 \leq Ey/(Ey + D2) \leq 0,60,$$

vorzugsweise $0,25 \leq Ey/(Ey + D2) \leq 0,50$,
und bevorzugter $0,33 \leq Ey/(Ey + D2) \leq 0,42$.

10. Reifen (10) nach einem der vorhergehenden Ansprüche, wobei die ersten Verstärkungselemente (50) einen Winkel von 10 bis 45 Grad mit der Umfangsrichtung (Z) bilden.

11. Reifen (10) nach einem der vorhergehenden Ansprüche, wobei die zweiten Verstärkungselemente (50) einen Winkel von 10 bis 45 Grad mit der Umfangsrichtung (Z) bilden.

12. Reifen (10) nach einem der vorhergehenden Ansprüche, wobei die Bruchkraft der ersten Arbeitslage (16) und/oder die Bruchkraft der zweiten Arbeitslage (18) von 20000 N.dm$^{-1}$ bis 33000 N.dm$^{-1}$, vorzugsweise von 22000 N.dm$^{-1}$ bis 32000 N.dm$^{-1}$ und bevorzugter von 23000 N.dm$^{-1}$ bis 32000 N.dm$^{-1}$ geht, wobei die Messung der Bruchkraft unter Zug gemäß der Norm ISO 6892 von 1984 ausgeführt wird.

13. Reifen nach einem der Ansprüche 1 bis 12, wobei der Laufstreifen (20) eine Dicke (Hb) von 3 mm bis 6 mm, vorzugsweise von 3,5 mm bis 4,5 mm aufweist.

14. Reifen nach einem der Ansprüche 1 bis 12, wobei der Laufstreifen (20) eine Dicke (Hb) von 5,5 mm bis 7 mm aufweist.

15. Reifen nach einem der Ansprüche 1 bis 12, wobei der Laufstreifen (20) eine Dicke (Hb) von 7 mm bis 10,5 mm, vorzugsweise von 8 mm bis 10 mm aufweist.

**Claims**

1. Tyre (10), defining three main directions: circumferential, axial and radial, comprising a crown (12) comprising a tread (20), two sidewalls (22), and two beads (24), each sidewall (22) connecting each bead (24) to the crown (12), a carcass reinforcement (32) anchored in each of the beads (24) and extending in the sidewalls (22) and in the crown (12), a crown reinforcement (14) extending in the crown (12) in the circumferential direction (Z) and situated radially between the carcass reinforcement (32) and the tread (20), the crown reinforcement (14) comprising a working reinforcement (15) comprising at least first and second working plies (16, 18), each first and second working ply (16, 18) respectively comprising first and second reinforcing elements (50, 52) arranged substantially parallel to one another in each first and second working ply (16, 18), **characterized in that** at least one of the following relationships I or II is satisfied:

$$2050 \le (D1^4 \times d1 \times 1000) / E1 \le -3998 \times E1 + 4547 \, (I)$$

where:

- D1 is the diameter of each first reinforcing element (50) made up of a metallic monofilament (66), expressed in mm, with D1 ranging from 0.25 to 0.38 mm,
- d1 is the density of the first reinforcing elements (50) in the first working ply (16), expressed in monofilaments per decimetre and measured in a direction perpendicular to the main axis of the metallic monofilaments (66),
- E1 is the mean thickness of the first working ply (16), expressed in mm and measured in the radial direction (Y);

$$2050 \le (D2^4 \times d2 \times 1000) / E2 \le -3998 \times E2 + 4547 \, (II)$$

where

- D2 is the diameter of each second reinforcing element (52) made up of a metallic monofilament (68), expressed in mm, with D2 ranging from 0.25 to 0.38 mm,
- d2 is the density of the second reinforcing elements (52) in the second working ply (18), expressed in monofilaments per decimetre and measured in a direction perpendicular to the main axis of the metallic monofilaments (68),
- E2 is the mean thickness of the second working ply (18), expressed in mm and measured in the radial direction (Y);

the characteristics D1, D2, d1, d2, E1, E2 being measured in the central part of the crown reinforcement (14) of the tyre (10) in the vulcanized state, on each side of the midplane (M) over a total axial width of 4 cm.

2. Tyre (10) according to the preceding claim, in which

$$(D1^4 \times d1 \times 1000) / E1 \le 2500 \text{ and/or } (D2^4 \times d2 \times 1000) / E2 \le 2500.$$

3. Tyre (10) according to any one of the preceding claims, in which D1 and/or D2 ranges from 0.25 mm to 0.38 mm, preferably from 0.28 to 0.35 mm, more preferably from 0.29 to 0.33 mm, and more still preferably from 0.30 mm to 0.32 mm.

4. Tyre (10) according to any one of the preceding claims, in which d1 and/or d2 ranges from 70 to 180 monofilaments per decimetre, preferably from 80 to 170 monofilaments per decimetre, more preferably from 100 to 150 monofilaments per decimetre.

5. Tyre (10) according to any one of the preceding claims, in which E1 and/or E2 is less than 0.75 mm, preferably less than or equal to 0.70 mm, more preferably less than or equal to 0.60 mm, and more preferably still less than or equal to 0.55 mm.

6. Tyre (10) according to any one of the preceding claims, in which E1 and/or E2 is greater than or equal to 0.40 mm, preferably greater than or equal to 0.45 mm.

7. Tyre (10) according to any one of the preceding claims, in which the mean thickness Ey radially separating a first reinforcing element and a second reinforcing element, measured in the radial direction (Y), ranges from 0.10 to 0.45 mm, preferably from 0.12 to 0.30 mm, and more preferably from 0.15 to 0.23 mm.

8. Tyre (10) according to the preceding claim, in which Ey and D1 satisfy the following relationship:

$$0.20 \leq Ey / (Ey + D1) \leq 0.60,$$

preferably

$$0.25 \leq Ey / (Ey + D1) \leq 0.50,$$

and more preferably

$$0.33 \leq Ey / (Ey + D1) \leq 0.42.$$

9. Tyre (10) according to Claim 7 or 8, in which Ey and D2 satisfy the following relationship:

$$0.20 \leq Ey / (Ey + D2) \leq 0.60,$$

preferably

$$0.25 \leq Ey / (Ey + D2) \leq 0.50,$$

and more preferably

$$0.33 \leq Ey / (Ey + D2) \leq 0.42.$$

10. Tyre (10) according to any one of the preceding claims, in which the first reinforcing elements (50) make an angle ranging from 10 to 45 degrees with the circumferential direction (Z).

11. Tyre (10) according to any one of the preceding claims, in which the second reinforcing elements (52) make an angle ranging from 10 to 45 degrees with the circumferential direction (Z).

12. Tyre (10) according to any one of the preceding claims, in which the force at break of the first working ply (16) and/or the force at break of the second working ply (18) ranges from 20000 N.dm$^{-1}$ to 33000 N.dm$^{-1}$, preferably from 22000 N.dm$^{-1}$ to 32000 N.dm$^{-1}$ and more preferably from 23000 N.dm$^{-1}$ to 32000 N.dm$^{-1}$, the measure of the force at break being measured in traction according to ISO 6892 from 1984.

13. Tyre according to any one of Claims 1 to 12, in which the tread (20) has a thickness (Hb) ranging from 3 mm to 6 mm, preferably from 3.5 mm to 4.5 mm.

14. Tyre according to any one of Claims 1 to 12, in which the tread (20) has a thickness (Hb) ranging from 5.5 mm to 7 mm.

15. Tyre according to any one of Claims 1 to 12, in which the tread (20) has a thickness (Hb) ranging from 7 mm to 10.5 mm, preferably from 8 mm to 10 mm.

Fig. 1

Fig. 2

**EP 3 658 387 B1**

## RÉFÉRENCES CITÉES DANS LA DESCRIPTION

**Documents brevets cités dans la description**

- WO 2013117476 A
- WO 2012175305 A
- WO 2015014575 A